Europäisches Patentamt

European Patent Office

Office européen des brevets

(11) Veröffentlichungsnummer: **0 274 050 B1**

# EUROPÄISCHE PATENTSCHRIFT

(45) Veröffentlichungstag der Patentschrift: **27.01.93**

(21) Anmeldenummer: **87117543.6**

(22) Anmeldetag: **27.11.87**

(51) Int. Cl.5: **H04L 7/10**, H04L 27/22, H04L 27/06, H04L 27/16

(54) **Verfahren und Anordnung zur Synchronisation eines Empfängers bei digitalen Übertragungssystemen.**

(30) Priorität: **09.01.87 DE 3700457**

(43) Veröffentlichungstag der Anmeldung:
**13.07.88 Patentblatt 88/28**

(45) Bekanntmachung des Hinweises auf die
Patenterteilung:
**27.01.93 Patentblatt 93/04**

(84) Benannte Vertragsstaaten:
**FR GB IT SE**

(56) Entgegenhaltungen:
**EP-A- 0 013 343**

(73) Patentinhaber: **ANT Nachrichtentechnik GmbH
Gerberstrasse 33
W-7150 Backnang(DE)**

(72) Erfinder: **Alberty, Thomas, Dipl.-Ing.
Danziger Strasse 28
W-7150 Backnang(DE)**
Erfinder: **Hespelt, Volker, Dr.-Ing.
Lichtensteinstrasse 44
W-7150 Backnang(DE)**

Rank Xerox (UK) Business Services

**Beschreibung**

Die Erfindung betrifft ein Verfahren und eine Anordnung zur Synchronisation eines Empfängers für digitale Signale gemäß Oberbegriff Patentanspruch 1 bzw. 3.

Bei konventionellen digitalen Übertragungssystemen wird das Problem der Takt- und Trägersynchronisation mittels rückgekoppelter Regelschleifen gelöst. Der Vorteil einer solchen Realisierung liegt in dem geringen dafür benötigten Aufwand.

Für moderne Burst-Übertragungssysteme werden jedoch sehr kurze Aquisitionszeiten gefordert, welche mit rückgekoppelten Regelschleifen zumeist nicht eingehalten werden können. Deshalb werden für die Anfangssynchronisation schnelle Schätzverfahren sehr wichtig.

In dem Aufsatz von Viterbi "Nonlinear Estimation of PSK-Modulated Carrier Phase with Application to Burst Digital Transmission", IEEE Transactions on Information Theory, Vol. IT-29, No. 4, July 1983, wurde ein Verfahren für die Schätzung der Trägerphase beim m-PSK-Übertragung vorgestellt.

Durch den Aufsatz "Maximum Likelihood Detection and Synchronisation by Parallel Digital Signal Processing: von Ascheid und Meyr, 1984, IEEE, S. 1068 ff., ist ein Verfahren für die parallele Schätzung von Takt- und Trägerphase bei Modulationsverfahren mit konstanten Einhüllenden beschrieben.

Für den Fall einer speziell gesendeten Präambel ist in dem Aufsatz "A Microprocessor-Based PSK Modem for Packet Transmission Over Satellite Channels" von Heegard et al, IEEE Transactions on Communications, Vol. Com-26, No. 5, May 1978, S. 552 ff., eine Möglichkeit der Schätzung von Trägerfrequenz, Trägerphase und Taktphase für die Anfangssynchonisation aufgezeigt. Hierbei wurde für die Taktphase lediglich ein relativ grober Schätzwert erzielt, wobei der begrenzte Frequenzoffset vernachlässigt wurde.

Der vorliegenden Erfindung lag die Aufgabe zugrunde, ein Verfahren der eingangs genannten Art und eine Schaltungsanordnung anzugeben, die es ermöglichen, eine schnelle, sichere Schätzung der Frequenz und Phase des empfangenen Träger- und Taktsignals anzugeben und damit eine schnelle Synchronisation zu ermöglichen, wobei der Aufwand relativ gering ist.

Die Lösung erfolgt durch die Merkmale des Anspruches 1 bzw. 3.

Obwohl im allgemeinen die Komplexität eines parallelen Schätzverfahrens bei der Erhöhung der Anzahl unbekannter Parameter überproportional zunimmt, ist das vorliegende Schätzverfahren sehr aufwandsarm, weil das 4-dimensionale Schätzproblem auf 2 zweidimensionale Schätzprobleme zurückgeführt wird, indem durch eine spezielle Signalaufbereitung das 4-dimensionale Schätzproblem auf das Problem der Schätzung von Frequenz und Phase einer einzelnen komplexen Schwingung überführt wird. Das erfindungsgemäße Verfahren ermöglicht für und durch eine speziell gesendete Präambel eine schnelle und exakte Schätzung von Frequenz und Phase des Takt- und des Trägersignals.

Vorteilhafte Ausgestaltungen ergeben sich durch die Unteransprüche. Das erfindungsgemäße Verfahren kann in vorteilhafter Weise durch aufwandsarme Schaltungsanordnungen realisiert werden.

Zwar ist die Vorgehensweise "lineare Regression" bekannt, beispielsweise durch den Aufsatz von Tretter "Estimating the Frequency of a Noisy Sinusoid by Linear Regression", IEEE Transactions on Information Theory, Vol. IT-31, No. 6, Nov. 1985, S. 832 ff., wobei vorgeschlagen wurde, die Frequenz und Phase eines komplexen Drehzeigers durch lineare Regression der Phasenwerte zu schätzen. Dazu ist eine kontinuierliche Folge von Phasenwerten erforderlich. Die vorhandenen Phasensprünge von $2\pi$ kann man z.B. durch Differenzbildung von aufeinanderfolgenden Phasenwerten erkennen und damit auch korrigieren, vgl. Tribolet "A New Phase Unwrapping Algorithm", in IEEE Transactions on Acoustics, Speech, and Signal Processing, Vol. ASSP-25, No. 2, April 1977, S. 170 ff.

Eine Trennung der Spektrallinien und ihre Weiterverarbeitung in Verbindung mit der linearen Regression wurde bisher nicht vorgenommen. Eine solche Vorgehensweise führt jedoch zu einer sehr leistungsfähigen, aber dabei sehr aufwandsarmen Empfängerstruktur.

Für das erfindungsgemäße Verfahren ist eine spezielle Präambel erforderlich. Diese muß so gewählt werden, daß bei richtiger Demodulation ein cosinusförmiger Verlauf des Empfangssignals entsteht. Dies ist der Fall, wenn nur die Grundfrequenz des Patterns in das Übertragungsband fällt. Dies erreicht man z.B. bei einer m-PSK-Modulation durch abwechselndes Senden von zwei entgegengesetzten Sendesymbolen. Die Frequenz des cosinusförmigen Signals hängt von der gesendeten Symbolfolge (Pattern) und der Taktfrequenz ab und wird als Patternfrequenz bezeichnet. Die Patternfrequenz enthält also die Information über die Taktfrequenz. Die Phasenlage des cosinusförmigen Signals enthält in entsprechender Weise die Information über die Taktphase.

Nach der Demodulation mit der angenommenen Trägerfrequenz ft0 erhält man dann als Empfangssignal

$$rd(t) = 2A \cdot \cos[2\pi(fp0 + fp\Delta) \cdot t + \epsilon] \cdot e^{j2\pi \, ft\Delta \, t} \cdot e^{j\theta},$$

wobei

t          die Zeit

2A          die unbekannte Amplitude des Empfangssignals,

fp0          die bekannte Patternfrequenz,

fp$\Delta$          der unbekannte Patternfrequenzoffset,

$\epsilon$          die unbekannte Taktphase,

ft$\Delta$          der unbekannte Trägerfrequenzoffset und

$\theta$          die unbekannte Trägerphase sind.

Das Spektrum des Empfangssignals ergibt sich dann zu:

$$Rd(f) = A \cdot e^{jf\epsilon/(fp0 + fp\Delta)} \cdot [\delta(f\text{-}fp0\text{-}fp\Delta\text{-}ft\Delta) + \delta(f + fp0 + fp\Delta\text{ -}ft\Delta)| \cdot e^{j\theta}$$

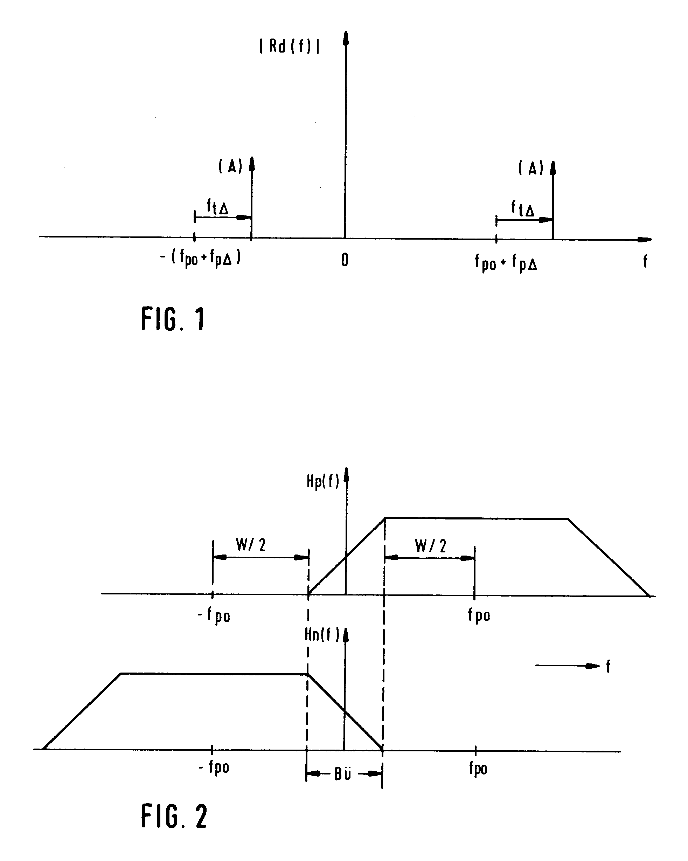

Das Spektrum des Empfangssignals ist aus der Figur 1 ersichtlich.

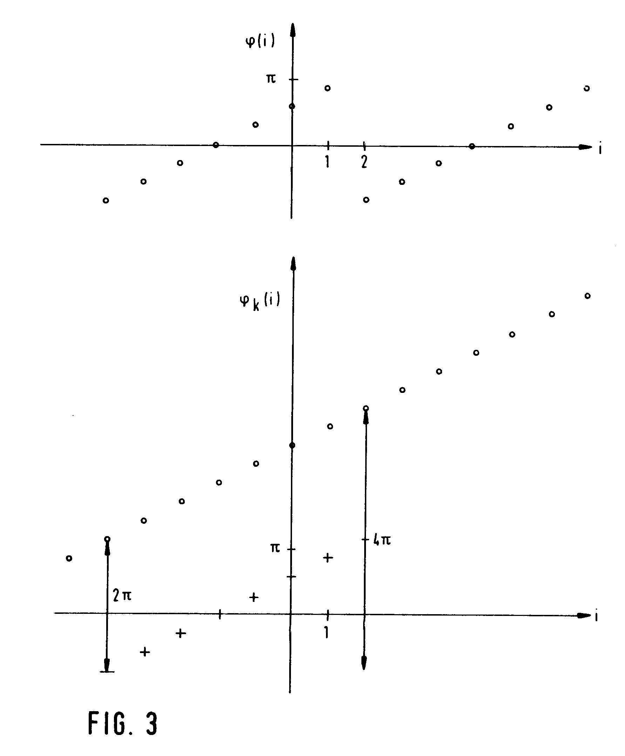

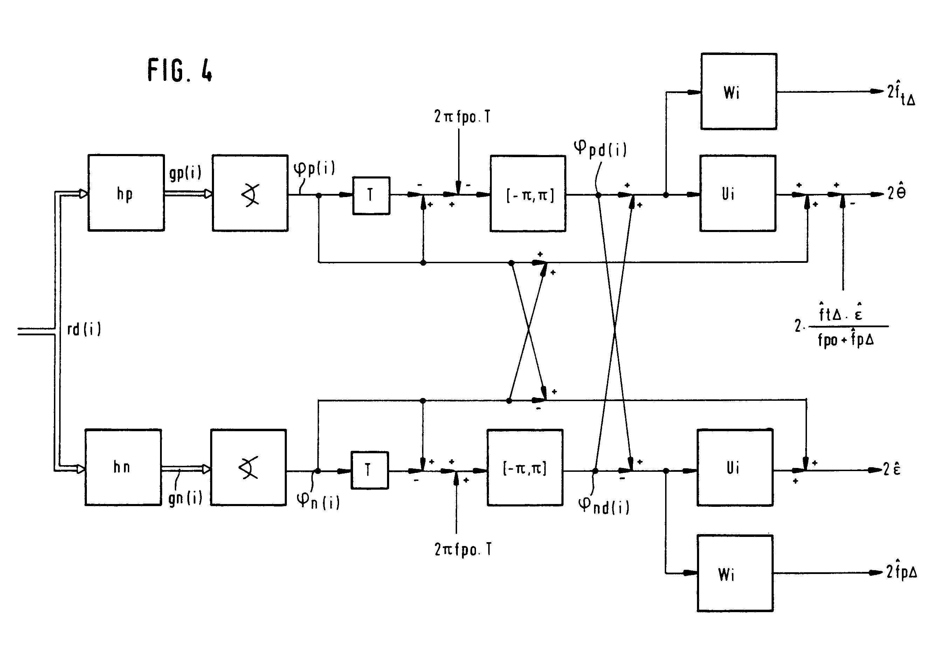

In Figur 2 sind die Übertragungsfunktionen der beiden Bandpässe zur Trennung der Spektrallinien über der Frequenz aufgetragen. Figur 3 schließlich dient zur Erläuterung des Verfahrens der linearen Regression. Figur 4 zeigt das Blockschaltbild einer Schaltungsanordnung, durch die das erfindungsgemäße Verfahren realisiert ist.

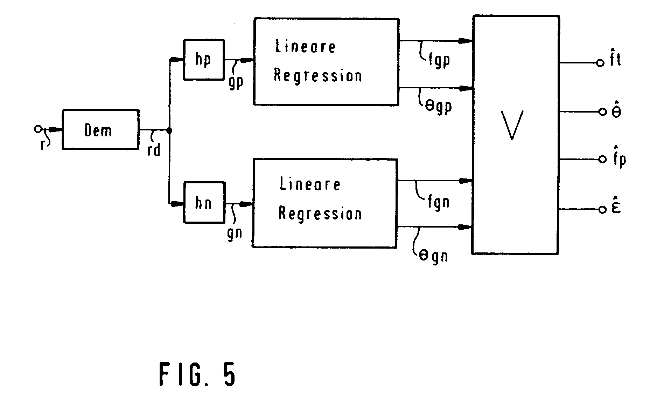

Figur 5 zeigt das Blockschaltbild eines Ausführungsbeispiels für eine erfindungsgemäße Schaltungsanordnung, wobei das Empfangssignal r bzw. rd nach einer Demodulation Dem durch Filterung zweier komplexer Bandpässe hp und hn die Spektrallinien gp, gn gewonnen werden, von denen mittels linearer Regression ihre Frequenz fgp, fgn und ihre Phase $\theta$gp und $\theta$pn ermittelt werden. Mittels einer Verknüpfung werden hieraus die gewünschten Schätzwerte für die Frequenz $\widehat{ft}$ des Trägers bzw. $\widehat{fp}$ des Patterns und für die Phase $\widehat{\theta}$ des Trägers bzw. $\widehat{\epsilon}$ des Taktes bestimmt.

Im folgenden werden nun die Verfahrensschritte beschrieben, und es wird versucht, die zugrundeliegende Idee mathematisch zu beleuchten. Anschließend erfolgt eine Beschreibung der Schaltungsanordnung gemäß Fig. 4.

Das Problem der parallelen Schätzung der vier gesuchten Signalparameter, nämlich Frequenz und Phase der Takt- und Trägerschwingung, wird durch eine spezielle Signalaufbereitung aufwandsmäßig vereinfacht, indem das Empfangssignal nach der Demodulation mit der angenommenen Trägerfrequenz ft0 über zwei komplexe Bandpässe gefiltert wird. Die beiden komplexen Bandpässe hp und hn weisen den in Figur 2 wiedergegebenen Frequenzverlauf ihrer Übertragungsfunktionen Hp(f), Hn(f) auf und erzeugen aus dem demodulierten Empfangssignal rd(t) zwei komplexe Signale gp(t) und gn(t). Eine solche Trennung ist dann möglich, wenn der Betrag der Summe bzw. Differenz von Patternfrequenzoffset fp$\Delta$ und Trägerfrequenzoffset ft$\Delta$ kleiner sind als die halbe Bandbreite W/2 des Durchlaßbereichs der beiden Filter. Wie man aus Figur 2 erkennen kann, liegen die beiden Patternfrequenzen fp0 und -fp0 exakt auf der Mitte der beiden Durchlaßbereiche hp bzw. hn.

Die beiden Ausgangssignale gp und gn ergeben sich damit zu:

gp(t) = A $\cdot$ exp{j[2$\pi$(fp0 + fp$\Delta$ + ft$\Delta$) $\cdot$ (t + $\epsilon$/(2$\pi$(fp0 + fp$\Delta$))) + $\theta$] und

gn(t) = A $\cdot$ exp{j[2$\pi$(ft$\Delta$ - fp0 - fp$\Delta$) $\cdot$ (t + $\epsilon$/(2$\pi$(fp0 + fp$\Delta$))) + $\theta$] .

Aufgrund der Struktur dieser beiden gewonnenen Signale ist nun das Schätzproblem aus dem ursprünglichen 4-dimensionalen Parameterraum überführt worden in zwei 2-dimensionale Parameterräume. Die Aufgabe ist reduziert worden auf die Bestimmung von Frequenz und Phase der beiden komplexen Signale gp und gn.

Die Frequenz fgp und die Phase 0gp des Signalzeigers gp(t) sind

fgp = fp0 + fp$\Delta$ + ft$\Delta$

$$0gp = \frac{fp0 + fp\Delta + ft\Delta}{fp0 + fp\Delta} \cdot \epsilon + \theta$$

Entsprechend gilt für den Signalzeiger gn(t)

3

fgn = ftΔ - fp0 -fpΔ

$$\text{Ogn} = \frac{ft\Delta + fp0 + fp\Delta}{fp0 + fp\Delta} \cdot \varepsilon + \theta$$

Aus diesem Gleichungssystem lassen sich die unbekannten Parameter fpΔ, $\epsilon$, ftΔ, $\theta$ berechnen, sofern Frequenz und Phase der beiden Signalzeiger gp(t) und gn(t) bekannt sind.

Eine brauchbare Methode zur Schätzung von Frequenz fs und Phase $\theta$s eines komplexen Drehzeigers ist die lineare Regression der Phasenwerte. Dazu müssen die Phasensprünge um $2\pi$, welche die Folge der Phasenwerte aufweist, rückgängig gemacht werden. Eine einfache Methode, um diese Sprünge zu eliminieren, besteht darin, die Differenzen zweier aufeinanderfolgender Phasenwerte zu betrachten und folgende Annahmen zu treffen:

Ist die Differenz größer als $\pi$, so liegt wahrscheinlich ein Sprung von $+2\pi$ vor, ist die Differenz dagegen kleiner als $-\pi$, so liegt wahrscheinlich ein Sprung um $-2\pi$ vor. Es wird also zunächst die Folge der Hauptwerte der Phase gebildet:

$\phi(i) = 2\pi fsiT + \theta s + Zi \cdot 2\pi$ mit $\phi(i) = \phi(t = i \cdot T)$ und

$i = \{-I, -I+1, ... , I\}$, d.h. mit $N = 2I + 1$ Abtastwerten im Abstand T und mit $\overline{z}i \in Z$ derart, daß $|\phi(i)| \leqq \pi$ ist. Falls eine gerade Anzahl von Abtastwerten vorliegt, so ist I eine gebrochene Zahl.

Durch Differenzbildung werden Sprünge erkannt und korrigiert, wodurch man dann die kontinuierliche Folge

$\phi k(i) = 2\pi fsiT + \theta s + Z_{-I} \cdot 2\pi$ erhält.

Durch lineare Regression lassen sich daraus Frequenz und Phase bestimmen.

Die Figur 3 veranschaulicht die Verhältnisse, wobei im oberen Teil der Figur der Verlauf der gemessenen Hauptwerte der Phase mit den $2\pi$ Sprüngen und im unteren Teil der Figur 3 der korrigierte stetige Verlauf $\phi k(i)$ wiedergegeben wurde. Man erkennt dabei leicht, daß bei jedem Sprung eine Anhebung um $2\pi$ zu erfolgen hat. Außerdem ist die Problematik für eine praktische Realisierung erkennbar. Je nach Frequenz und Betrachtungszeitraum NT kann der Wertebereich von $\phi k(i)$ sehr groß werden. Für die Realisierung ist es daher sehr viel einfacher, nur mit den Differenzwerten zu rechnen. Es sei deshalb angenommen

$\phi d(i) = \phi(i) - \phi(i-1) + yi \cdot 2\pi$ mit

$i = \{-I+1, -I+2, ...I\}$, d.h. mit N-1 werten und $yi \in Z$ derart, daß $|\phi d(i) \leqq \pi$ ist.

$\phi d(i)$ ist die Folge der Differenzen der Phasenwerte $\phi(i)$ und zwar reduziert auf den Bereich $-\pi$ bis $+\pi$. Dann erhält man entsprechend der linearen Regression die Schätzwerte $\hat{f}s$ und $\hat{\theta}s$ gemäß:

$$\hat{\theta}s = \phi(i=I) + \sum_{i=-I+1}^{I} \phi d(i) \cdot Ui \quad \text{mit} \quad Ui = -(N - 1 + 2i)/2N$$
$$\hat{f}s = \sum_{i=-I+1}^{I} \phi d(i) \cdot Wi \quad \text{mit}$$

$Wi = 6 \cdot [N^2/4 - (i - 1/2)^2] / [2\pi TN(N^2-1)]$.

Die Figur 4 zeigt das Blockschaltbild eines Ausführungsbeispiels für eine Schaltungsanordnung, in der das erfindungsgemäße Verfahren realisiert ist. Das demodulierte Signal rd(t) wird über die beiden Bandpässe hp und hn gefiltert. Von ihren Übertragungsfunktionen ist jeweils nur der Übergangsbereich der Breite Bü (s. Fig. 2) durch Vorgabe von fp0 und W/2 spezifiziert. Es können daher ohne weiteres zur Mittenfrequenz symmetrische Filter verwendet werden. Für hp ist die Mittenfrequenz fp0, für hn ist sie -fp0. Vorteilhafterweise werden die beiden Bandpässe konjugiert komplex zueinander realisiert, wodurch eine einfache, gemeinsame und für die Ausgangssignale gleichartige Berechnung möglich ist.

Aus der Figur 4 sind deutlich die beiden an die Bandpässe sich anschließenden Verarbeitungszweige erkennbar; aus den beiden Ausgangsfolgen gp(i) und gn(i), das sind komplexe Zeiger, werden die Folgen ihrer Phasenwerte $\phi p(i)$ und $\phi n(i)$ gebildet. Dies kann z.B. mit Hilfe einer arctan-Tabelle erfolgen. Anschließend werden die Differenzen zweier aufeinander folgender Phasenwerte bestimmt und zwar mittels eines Verzögerungsgliedes T und eines Differenzgliedes, durch welches die Differenz $\phi(i) - \phi(i-1)$ gebildet wird. Bevor die Reduzierung dieser Differenzwerte auf den Bereich $-\pi$ bis $+\pi$ erfolgt, wird der konstante Anteil dieser Differenzen $2\pi fp0 \cdot T$ abgezogen. Dadurch kommt es zu weniger Fehlern durch die anschließende Reduzierung. Bei geeigneter Quantisierung erfolgt die Reduzierung der Differenzwerte auf den Bereich $-\pi$ bis $+\pi$ in einfacher Weise durch Ausblendung des höchstwertigsten Bits. Entsprechend der linearen Regression wird anschließend eine Gewichtung mit den Faktoren Ui und Wi durchgeführt. Zusätzlich zur Gewichtung sind noch einige Summen- und Differenzbildungen erforderlich, um die gewünschten Werte $\widehat{fp\Delta}$, $\widehat{ft\Delta}$, $\widehat{\theta}$, $\widehat{\epsilon}$ zu erhalten. Diese können, wie in Fig. 4 dargestellt, in vorteilhafter Weise auch vor der Gewichtung durchgeführt werden. Die Werte $\widehat{fp\Delta}$, $\widehat{ft\Delta}$, $\widehat{\epsilon}$, $\widehat{\theta}$ ergeben sich dann, wie in Fig. 4 dargestellt.

Das Verfahren eignet sich auch zur Bestimmung von Frequenz und Phase des Taktsignals bei Basisbandsignalen. Dann entfallen die Demodulation mit der Trägerfrequenz ft0 und die Schätzung von ft$\Delta$ und $\theta$.

**Patentansprüche**

1. Verfahren zur Synchronisation von Empfängern bei digitalen Übertragungssystemen, wobei eine spezielle Präambel übertragen wird, die so gewählt wird, daß bei richtiger Demodulation das Empfangssignal einen cosinusförmigen Verlauf mit der Patternfrequenz fp, aus der sich die Taktfrequenz ergibt, aufweist, und wobei eine Schätzung von Frequenz und/oder Phase des Träger- bzw. des Taktsignals erfolgt, dadurch gekennzeichnet, daß aus dem Empfangssignal (rd) nach der Demodulation mit einer angenommenen Trägerfrequenz ft0 durch Filterung die einzelnen Spektrallinien (gp, gn) gewonnen werden, und

   daß von diesen Signalen jeweils durch lineare Regression deren Frequenz (fgp, fgn) und ihre Phase ($\theta$gp, $\theta$gn) bestimmt werden, wobei aus diesen Frequenz- und Phasenwerten mittels folgender Differenz- und Summenbildung die Schätzwerte des

   Trägerfrequenzoffset $\widehat{ft\Delta}$ = 1/2 (fgp + fgn),
   der Patternfrequenz $\widehat{fp}$ = 1/2 (fgp - fgn),
   der Taktphase $\widehat{\epsilon}$ = 1/2 ($\theta$gp - $\theta$gn) und

   $$\text{der Trägerphase} \quad \widehat{\theta} \quad = 1/2\ (\theta gp + \theta gn) - \frac{\widehat{ft\Delta} \cdot \widehat{\epsilon}}{fp0 + \widehat{fp\Delta}}$$

   ermittelt werden.

2. Verfahren nach Anspruch 1, dadurch gekennzeichnet, daß die Filterung mittels zweier konjugiert komplexer Bandpässe erfolgt.

3. Schaltungsanordnung zur Synchronisation von Empfängern bei digitalen Übertragungssystemen, wobei eine spezielle Präambel übertragen wird, die so gewählt wird, daß bei richtiger Demodulation das Empfangssignal einen cosinusförmigen Verlauf mit der Patternfrequenz fp, aus der sich die Taktfrequenz ergibt, aufweist, und wobei eine Schätzung von Frequenz und/oder Phase des Träger- bzw. des Taktsignals erfolgt, dadurch gekennzeichnet, daß zwei konjugiert komplexe Bandpaßfilter (hp, hn) vorgesehen sind, die durch das demodulierte Empfangssignal rd(i) gespeist werden und welche die komplexen Ausgangssignale gp(i) und gn(i) liefern,

   daß anschließend jeweils eine Schaltung folgt, die daraus Folgen der Phasenwerte bildet $\phi$p(i), $\phi$n(i),

   daß anschließend ein Verzögerungsglied T und ein Differenzglied vorgesehen sind, die jeweils die Differenzen zweier aufeinander folgender Phasenwerte $\phi$p(i) - $\phi$p(i-1) bzw. $\phi$n(i) - $\phi$n(i-1) erzeugen,

   daß anschließend jeweils ein Differenzglied vorgesehen ist, das den konstanten Anteil $2\pi fp0 \cdot T$ bzw. $-2\pi fp0 \cdot T$ abzieht, wobei 1/T die Abtastrate ist,

   daß anschließend Mittel zur Reduzierung der Differenzwerte $\phi$pd(i), $\phi$nd(i) auf den Bereich $-\pi$ bis $+\pi$ vorgesehen sind,

   daß anschließend Mittel vorgesehen sind, die Gewichtung, Summen- und Differenzbildungen gemäß folgenden Gleichungen durchführen:
   1. die geschätzte Trägerphase $\widehat{\theta}$

$$\hat{\theta} = \left\{ \Psi p(i=I) + \Psi n(i=I) + \sum_{i=-I+1}^{I} \left[\Psi pd(i) + \Psi nd(i)\right] \cdot Ui \right.$$
$$\left. - 2\,\hat{f}t_\Delta \cdot \hat{\epsilon} \,/(fp0 + \hat{f}p_\Delta) \right\}/2$$

mit $Ui = -(N-1+2i)/2N$
2. der geschätze Trägerfrequenzoffset $\hat{f}t_\Delta$

$$\hat{f}t_\Delta = \left\{ \sum_{i=-I+1}^{I} \left[\Psi pd(i) + \Psi nd(i)\right] Wi \right\} /2$$

mit $Wi = 6[N^2/4 - (i-1/2)^2] / [2\pi TN(N^2-1)]$
3. der geschätzte Patternfrequenzoffset $\hat{f}p_\Delta$

$$\hat{f}p_\Delta = \left\{ \sum_{i=-I+1}^{I} \left[\Psi pd(i) - \Psi nd(i)\right] \cdot Wi \right\} /2$$

4. die geschätzte Taktphase $\hat{\epsilon}$

$$\hat{\epsilon} = \left\{ \Psi p(i=I) - \Psi n(i=I) + \sum_{i=-I+1}^{I} \left[\Psi pd(i) - \Psi nd(i)\right] Ui \right\}/2$$

wobei i die laufende Nummer der N Abtastzeitpunkte im Abstand T,
und I = (N-1)/2
und fp0 die bekannte Patternfrequenz ist.

**4.** Schaltungsanordnung nach Anspruch 3, <u>dadurch gekennzeichnet, daß</u> die Mittel zur Reduzierung der Differenzwerte $\phi pd(i)$ und $\phi nd(i)$ derart <u>ausgestaltet sind, daß die</u> Reduzierung jeweils durch Ausblenden des höchstwertigsten Bits erfolgt.

**Claims**

**1.** Method of synchronizing receivers in digital transmission systems with transmission of a special preamble selected in such a manner that, with correct demodulation, the received signal has a cosine shape with a pattern frequency fp from which the clock pulse frequency results, and wherein frequency and/or phase of the carrier and clock pulse signal, respectively, are estimated, <u>characterized in that,</u> after demodulation with an assumed carrier frequency ft0, the individual spectral <u>lines (gp, gn) of the</u> received signal (rd) are obtained by filtering; and from these signals, their frequency (fgp, fgn) and phase ($\theta$gp, $\theta$gn) are determined by linear regression, with these frequency and phase values being used, by means of subsequent difference and sum formation, to obtain the following estimated values:

carrier frequency offset $\hat{f}t_\Delta$ = 1/2 (fgp + fgn),
pattern frequency $\hat{f}p$ = 1/2 (fgp - fgn),
clock pulse phase $\hat{\epsilon}$ = 1/2 ($\theta$gp - $\theta$gn), and

$$\text{carrier phase} \qquad \hat{\theta} = 1/2\,(\theta gp + \theta gn) - \frac{\hat{f}t_\Delta \cdot 2}{fp0 + \hat{f}p_\Delta}$$

2. Method as defined in claim 1, wherein filtering is effected by means of two conjugated, complex bandpass filters.

3. Circuit arrangement for synchronizing receivers in digital transmission systems with transmission of a special preamble selected in such a manner that, with correct demodulation, the received signal has a cosine shape with a pattern frequency fp from which the clock pulse frequency results, and wherein frequency and/or phase of the carrier and clock pulse signal, respectively, are estimated, characterized in that two conjugated, complex bandpass filters (hp, hn) are provided which are fed by the demodulated received signal rd(i) and which furnish complex output signals gp(i) and gn(i);

followed by a circuit which forms sequences of the phase values $\phi p(i)$, $\phi n(i)$ from said output signals;

whereupon a delay member T and a difference forming member are provided, which produce the differences between two successive phase values $\phi p(i) - \phi p(i-1)$ and $\phi n(i) - \phi n(i-1)$;

whereupon a difference forming member is provided, which deducts the constant component $2\pi fp0 \cdot T$ and $-2\pi fp0 \cdot T$, respectively, with the sampling rate being $1/T$;

whereupon means are provided for reducing the difference values $\phi pd(i)$, $\phi nd(i)$ to a range from $-\pi$ to $+\pi$;

whereupon means are provided for effecting weighting, sum and difference formations according to the following equations:

(1) the estimated carrier phase $\theta$

$$\hat{\theta} = \left\{ \varphi p(i=I) + \varphi n(i=I) + \sum_{i=-I+1}^{I} [\varphi pd(i) + \varphi nd(i)] \cdot Ui - 2 \hat{ft\Delta} \cdot \hat{\epsilon}/(fp0 + \hat{fp\Delta}) \right\} /2$$

where $Ui = - (N - 1 + 2i)/2N$

(2) the estimated carrier frequency offset $\hat{ft\Delta}$

$$\hat{ft\Delta} = \left\{ \sum_{i=-I+1}^{I} [\varphi pd(i) + \varphi nd(i)] Wi \right\} /2$$

where $Wi = 6[N^2/4 - (i - 1/2)^2] / [2\pi TN(N^2 - 1)]$

(3) the estimated pattern frequency offset $\hat{fp\Delta}$

$$\hat{fp\Delta} = \left\{ \sum_{i=-I+1}^{I} [\varphi pd(i) - \varphi nd(i)] \cdot Wi \right\} /2$$

(4) the estimated clock pulse phase $\hat{\epsilon}$

$$\epsilon = \left\{ \varphi p(i=I) - \varphi n(i=I) + \sum_{i=-I+1}^{I} [\varphi pd(i) - \varphi nd(i)] Ui \right\} /2$$

where

i = the running number of the N sampling moments at a spacing T,

I = (N-1)/2, and

fp0 = the known pattern frequency.

4. Circuit arrangement as defined in claim 3, wherein the means for reduction of the difference values $\phi pd(i)$ are configured in such a way that the reduction and $\phi nd(i)$ is effected each time by cutting out the highest value bit.

7

**Revendications**

1. Procédé pour la synchronisation de récepteurs dans le cas des systèmes de transmission numérique, dans lequel on transmet un préambule spécial que l'on choisit de façon que, avec une démodulation correcte, le signal de réception présente une allure cosinusoïdale avec la fréquence fp du message modèle, à partir de laquelle on obtient la fréquence du signal de synchronisation, et procédé dans lequel se fait une estimation de la fréquence et/ou de la phase du signal de la porteuse et du signal de synchronisation, procédé caractérisé par le fait qu'à partir du signal de réception (rd), après la démodulation avec une fréquence ft0 supposée de la porteuse, on obtient, par filtrage, les différentes raies spectrales (gp, gn), et

par le fait qu'à partir de ces signaux on détermine respectivement, par régression linéaire, leur fréquence (fgp, fgn) et leur phase ($\theta$gp, $\theta$gn), et procédé dans lequel, à partir de ces valeurs de fréquence et de phase, on obtient, en formant les différences et les sommes suivantes, les valeurs estimées de

l'écart de la fréquence porteuse $\widehat{ft}_\Delta$ = 1/2 (fgp + fgn),
la fréquence du message modèle $\widehat{fp}$ = 1/2 (fgp - fgn),
la phase du signal de synchronisation $\widehat{\epsilon}$ = 1/2 ($\theta$gp - $\theta$gn) und

la phase de la porteuse. $\qquad \widehat{\theta} = 1/2\ (\theta gp\ +\ \theta gn)\ -\ \dfrac{\widehat{ft}_\Delta\ \cdot\ \widehat{\epsilon}}{fp0\ +\ \widehat{fp}_\Delta}$

2. Procédé selon la revendication 1, caractérisé par le fait que le filtrage se fait au moyen de deux filtres passe-bande complexes conjugués.

3. Disposition de circuit pour la synchronisation de récepteurs dans le cas des systèmes de transmission numérique, dans lequel on transmet un préambule spécial que l'on choisit de façon que, avec une démodulation correcte, le signal de réception présente une allure cosinusoïdale avec la fréquence fp du message modèle, à partir de laquelle on obtient la fréquence du signal de synchronisation, et procédé dans lequel se fait une estimation de la fréquence et/ou de la phase du signal de la porteuse et du signal de synchronisation, caractérisée par le fait que sont prévus deux filtres passe-bande complexes conjugués (jp, hn) qui sont alimentés par le signal de réception, démodulé, rd(i) et qui fournissent les signaux de sortie complexes gp(i) et gn(i),

par le fait que vient à la suite un circuit qui, à partir de cela, forme les suites des valeurs de phase $\phi$p(i), $\phi$n(i),

par le fait qu'ensuite sont prévus un élément de temporisation T et un élément soustracteur qui donnent respectivement les différences entre deux valeurs de phase successives $\phi$p(i) - $\phi$p(i-1) ou $\phi$n-(i) - $\phi$n(i-1), par le fait qu'ensuite est respectivement prévu un élément soustracteur qui extrait la partie constante $2\pi$fp0 $\cdot$ T ou $-2\pi$fp0 $\cdot$ T, 1/T étant la fréquence d'échantillonnage,

par le fait qu'ensuite sont prévus des moyens pour réduire les valeurs résultant des différences $\phi$pd(i), $\phi$nd(i), sur l'intervalle $-\pi$ à $+\pi$,

par le fait qu'ensuite sont prévus des moyens qui procèdent à la pondération et à la formation des sommes et des différences selon les équations suivantes:

1. la phase estimée de la porteuse $\widehat{\theta}$

$$\widehat{\theta} = \left\{ \varphi p(i{=}I) + \varphi n(i{=}I) + \sum_{i=-I+1}^{I} \left[ \varphi pd(i) + \varphi nd(i) \right] \cdot Ui \right.$$
$$\left. - 2\ \widehat{ft}_\Delta \cdot \widehat{\epsilon}\ /(fp0 + \widehat{fp}_\Delta) \right\}/2$$

avec Ui = - (N - 1 + 2i)/2N
2. le décalage estimé de la fréquence de la porteuse $\widehat{ft}_\Delta$

$$\hat{f}t_\Delta = \left\{ \frac{1}{\sum\limits_{i=-I+1}^{I}} \left[ \phi pd(i) + \phi nd(i) \right] Wi \right\} / 2$$

avec Wi = 6[$N^2/4$ - (i-1/2)$^2$] / [$2\pi TN(N^2-1)$]

3. le décalage estimé de la fréquence du message modèle $\hat{f}p_\Delta$

$$\hat{f}p_\Delta = \left\{ \frac{1}{\sum\limits_{i=-I+1}^{I}} \left[ \phi pd(i) - \phi nd(i) \right] \cdot Wi \right\} / 2$$

4. la phase estimée du signal de synchronisation $\hat{\epsilon}$

$$\hat{\epsilon} = \left\{ \phi p(i=I) - \phi n(i=I) + \sum\limits_{i=-I+1}^{I} \left[ \phi pd(i) - \phi nd(i) \right] Ui \right\} / 2$$

où i est le numéro courant des N instants d'échantillonnage sur la période T,
et I = (N-1)/2
et fp0 est la fréquence connue du message modèle.

4. Disposition de circuit selon la revendication 3, caractérisée par le fait que les moyens prévus pour réduire les valeurs des différences $\phi pd(i)$ et $\phi nd(i)$ sont conçus de façon que la réduction s'obtienne chaque fois en éliminant, par échantillonnage, le bit de poids fort.

**FIG. 1**

**FIG. 2**

FIG. 3

FIG. 4

FIG. 5